**Europäisches Patentamt**

**European Patent Office**

**Office européen des brevets**

(11) Veröffentlichungsnummer : **0 410 113 B1**

## (12) EUROPÄISCHE PATENTSCHRIFT

(45) Veröffentlichungstag der Patentschrift :
**19.08.92 Patentblatt 92/34**

(51) Int. Cl.$^5$ : **B60H 1/28,** B60H 3/06

(21) Anmeldenummer : **90110228.5**

(22) Anmeldetag : **30.05.90**

(54) **Vorrichtung zur Frischluftzufuhr zum Fahrgastraum eines Fahrzeugs.**

(30) Priorität : **22.07.89 DE 3924293**

(43) Veröffentlichungstag der Anmeldung :
**30.01.91 Patentblatt 91/05**

(45) Bekanntmachung des Hinweises auf die
Patenterteilung :
**19.08.92 Patentblatt 92/34**

(84) Benannte Vertragsstaaten :
**ES FR GB IT**

(56) Entgegenhaltungen :
**DE-A- 3 330 951
DE-C- 3 727 672
DE-U- 1 653 979
FR-A- 2 601 301**

(73) Patentinhaber : **MERCEDES-BENZ
AKTIENGESELLSCHAFT
Postfach 60 02 02
W-7000 Stuttgart 60 (DE)**

(72) Erfinder : **Koukal, Heinz
Marienbaderweg 47
W-7032 Sindelfingen (DE)**
Erfinder : **Arold, Klaus
Nikolaus-Lenau-Platz 23
W-7032 Sindelfingen (DE)**
Erfinder : **Trube, Hans
Brühlstrasse 17/1
W-7033 Herrenberg (DE)**
Erfinder : **Karioth, Gernoth
Wilhelm-Haspel-Strasse 62
W-7032 Sindelfingen (DE)**

## Beschreibung

Die Erfindung betrifft eine Vorrichtung zur Frischluftzufuhr zum Fahrgastraum eines Fahrzeugs der im Oberbegriff des Anspruchs 1 angegebenen Gattung.

Bei einer bekannten Belüftungsvorrichtung dieser Art (DE-C-11 88 458) ist der Frischlufteinlaß im Karosserievorbau unterhalb der Windschutzscheibe angeordnet. Der Luftverteilerkasten ist mit seiner Einlaßöffnung an der Unterseite des Karosserieblechs angesetzt und umschließt mit einer stirnseitigen Dichtung den Frischlufteinlaß. Der Luftfilter ist in der Einlaßöffnung schräg angeordnet. Unterhalb des in Fahrtrichtung hinteren Filterbereichs ist eine Tropfensammelleiste und im Boden des Luftverteilerkastens sind Wasserablauföffnungen vorgesehen. Zum Filterwechsel muß der vom Motorraum aus zugängliche Luftverteilerkasten komplett demontiert werden. Damit ist der Filterwechsel sehr zeitraubend und kostenträchtig, so daß man sich zur Luftfilterung auf Staubfilter für Schmutzpartikel beschränkt, die nur relativ langfristig verschmutzen und wenig wasserempfindlich sind. Der Einsatz von Schadstoffiltern, z.B. Aktivkohlefiltern, die bei Nässe ihre chemische Filtereigenschaft verlieren, ist nicht möglich.

Der Erfindung liegt die Aufgabe zugrunde, eine Vorrichtung der eingangs genannten Art so zu verbessern, daß einerseits der Filterwechsel problemlos und schnell ohne Werkstattaufenthalt durchgeführt werden kann und andererseits der Luftfilter vollständig gegen Nässe geschützt ist.

Die Aufgabe ist bei einer Vorrichtung der im Oberbegriff des Anspruchs 1 angegebenen Gattung erfindungsgemäß durch die Merkmale im Kennzeichenteil des Anspruchs 1 gelöst.

Bei der erfindungsgemäßen Belüftungsvorrichtung liegt durch Anordnung des Frischlufteinlasses in der Motorhaube mit Öffnen dieser der erfindungsgemäße Filterdeckel frei und kann von Hand von der Einlaßöffnung des Luftverteilerkastens ohne Werkzeug entfernt werden. Danach ist der Luftfilter unmittelbar zugänglich und kann leicht ausgetauscht werden. Nach Wiederaufsetzen des Filterdeckels ist der Luftfilter völlig wassergeschützt. Die bei geschlossener Motorhaube über den Frischlufteinlaß eindringende Frischluft wird über angenähert vertikal ausgerichtete Lufteintrittsöffnungen im Mantel des haubenförmigen Filterdeckels angesaugt. Über den Frischlufteinlaß einfließendes Wasser wird auf der Oberseite des Filterdeckels abgeleitet. Als Luftfilter können wahlweise als Schmutzfilter wirkende Filter oder sog. Schadstoffabsorptionsfilter eingesetzt werden.

Vorteilhafte Ausführungsformen der erfindungsgemäßen Belüftungsvorrichtung mit zweckmäßigen Weiterbildungen und Ausgestaltungen der Erfindung ergeben sich aus den weiteren Ansprüchen.

Bei einer bevorzugten Ausführungsform der Erfindung werden die sog. Frischluftklappen den Lufteintrittsöffnungen im Filterdeckel zugeordnet. Dies hat den Vorteil, daß der Luftfilter nur bei Frischluftbedarf von Luft durchsetzt wird, also dann, wenn Frischluft im Fahrgastraum benötigt wird. Damit wird die Standzeit des Luftfilters wesentlich erhöht, was insbesondere bei dem Einsatz von Schadstoffabsorptionsfiltern von wesentlicher Bedeutung ist.

In einer weiteren Ausführungsform der Erfindung trägt der Filterdeckel auf seiner dem Frischlufteinlaß zugekehrten Oberseite einen kragenförmig umlaufenden Prallsteg, auf dem ein als Grobfilter dienendes, ringförmiges und zur Mitte hin geneigtes Gitter aufgesetzt ist, das mit seiner vom Prallsteg abgekehrten stirnseitigen Öffnung den Frischlufteinlaß umgibt. Das Grobfilter dient der Reinigung der Frischluft von Schmutz- und Staubpartikeln, so daß das nachfolgende Luftfilter weniger belastet wird, was zur weiteren Erhöhung der Standzeit beiträgt. Beim Filterwechsel kann das Grobfilter am abgenommenen Filterdeckel mit Preßluft in einfacher Weise gereinigt werden.

Die Erfindung ist anhand eines in der Zeichnung dargestellten Ausführungsbeispiels im folgenden näher beschrieben. Es zeigen in schematischer Darstellung:

Fig. 1 einen Querschnitt einer Belüftungsvorrichtung für ein Kraftfahrzeug,

Fig. 2 ein Draufsicht der Belüftungsvorrichtung in Fig. 1 ohne Motorhaube und Luftverteilerkasten.

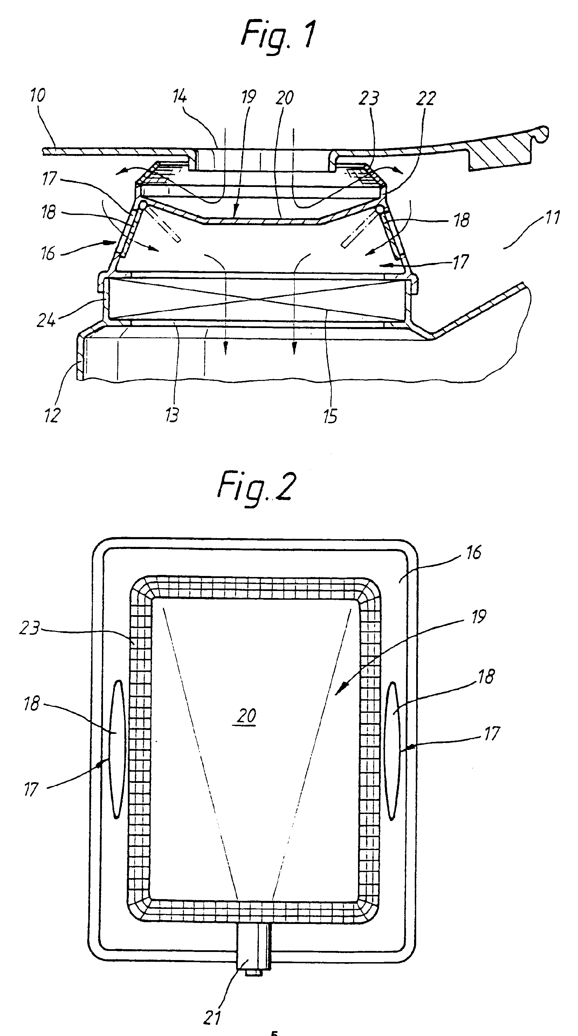

In Fig. 1 ist mit 10 die Motorhaube gekennzeichnet, die den im Karosserievorbau enthaltenden Motorraum 11 eines Kraftfahrzeugs abdeckt. Dem Motorraum 11 ist in Fahrtrichtung üblicherweise die Fahrgastzelle oder der Fahrgastraum nachgeordnet, der mittels einer Belüftungsvorrichtung mit Frischluft versorgt werden soll. Die im Motorraum 11 angeordnete Belüftungsvorrichtung besteht im wesentlichen aus einem Luftverteilerkasten 12, der mit einer von einem kragenförmigen Öffnungsstutzen 24 freigegebenen Lufteintrittsöffnung 13 unterhalb eines Frischlufteinlasses 14 in der Motorhaube 10 liegt und mit mindestens einer nicht dargestellten Auslaßöffnung im Fahrgastraum des Kraftfahrzeugs in Verbindung steht. Im Öffnungsstutzen 24 ist ein Luftfilter 15 auswechselbar gehalten, der die gesamte, etwa rechteckförmige Lufteintrittsöffnung 13 überdeckt.

Auf den Öffnungsstutzen 24 des Luftverteilerkastens 12 ist ein Filterdeckel 16 aufgesetzt und am Luftverteilerkasten 12, beispielsweise durch Federklammern (nicht dargestellt), lösbar befestigt. Der Filterdeckel 16 ist haubenartig ausgebildet und trägt in seinem vertikalen, leicht geneigten Mantelbereich auf gegenüberliegenden Seiten zwei Luftdurchtrittsöffnungen 17, die von jeweils einer Luftklappe 18 wahlweise freigebbar oder verschließbar sind. Auf der dem Frischlufteinlaß 14 zugekehrten Oberseite des Filterdeckels 16 ist ein Wasserablauf 19 in Form einer sich längs der größten Abmessung des Filterdeckels 16 mittig erstreckenden Rinne 20 ausgebildet, die von der einen Deckelseite zur anderen hin bei gleichzeitiger Verjüngung abfällt. An ihrem verjüngten Ende mündet die Rinne 20 in einen über den Deckelrand vorstehenden rohrförmigen Ablaufstutzen 21 (Fig. 2). Auf der dem Frischlufteinlaß 14 zugekehrten Oberseite des Filterdeckels 16 verläuft ferner längs des Deckelrands ein kragenörmig vorstehender Prallsteg 22, auf dem ein als Grobfilter dienendes Gitter 23 aufgesetzt ist. Das Gitter 23 ist im Querschnitt etwa trapezförmig und umgibt mit seinem vom Prallsteg 22 abgekehrten einwärts weisenden Stirnende den Frischlufteinlaß 14 in der Motorhaube 11.

Sind die beiden Luftklappen 18 geöffnet, so gelangt Frischluft über den Frischlufteinlaß 14, das Gitter 23 und über die freien Luftdurchtrittsöffnungen 17 in das Haubeninnere des Filterdeckels 16. Von hier aus durchsetzt die von Feuchtigkeit befreite Luft den Luftfilter 15 und strömt von Staub bzw. Schadstoffen gereinigt im Luftverteilerkasten 12 zum Fahrgastraum des Kraftfahrzeugs. Die Luftströmung ist in Fig. 1 durch Strömungspfeile symbolisiert.

Die filtergereinigte Frischluft muß nicht unmittelbar dem Fahrgastraum zugeführt werden, sondern kann zuvor in einer Heizung aufgewärmt oder in einer Klimaanlage gekühlt werden.

## Patentansprüche

1. Vorrichtung zur Frischluftzufuhr zum Fahrgastraum eines Fahrzeugs, das einen dem Fahrgastraum in Fahrtrichtung vorgelagerten Karosserievorbau aufweist, der einen von einer Motorhaube abdeckbaren Motorraum umschließt, mit einem auf der Oberseite des Karosserievorbaus angeordneten Frischlufteinlaß und einem darunterliegenden Luftverteilerkasten, der zum Frischlufteinlaß hin mit einem Luftfilter abgedeckt und mit einem Wasserablauf versehen ist, dadurch gekennzeichnet, daß der Frischlufteinlaß (14) in der Motorhaube (10) und der Wasserablauf (19) auf der dem Frischlufteinlaß (14) zugekehrten Oberseite eines den Luftfilter (15) überdeckenden, haubenartigen Filterdeckels (16) angeordnet ist, der auf dem Luftverteilerkasten (12) lösbar befestigt ist und in seinem Mantelbereich Luftdurchtrittsöffnungen (17) trägt.

2. Vorrichtung nach Anspruch 1, dadurch gekennzeichnet, daß der Luftverteilerkasten (12) einen zum Frischlufteinlaß (14) hin vorstehenden eine Lufteintrittsöffnung (13) umschließenden, kragenförmigen Öffnungsstutzen (24) aufweist, in dem der Luftfilter (15) herausnehmbar einliegt und auf dem der Filterdeckel (16) lösbar aufsetzbar ist.

3. Vorrichtung nach Anspruch 1 oder 2, dadurch gekennzeichnet, daß jeder Luftdurchtrittsöffnung (17) im Filterdeckel (16) eine schwenkbare Luftklappe (18) zu deren willkürlichem Verschließen oder Freigeben zugeordnet ist.

4. Vorrichtung nach einem der Ansprüche 1 - 3, dadurch gekennzeichnet, daß der Filterdeckel (16) auf seiner dem Frischlufteinlaß (14) zugekehrten Oberseite einen kragenförmig umlaufenden Prallsteg (22) trägt, auf dem ein als Grobfilter dienendes,ringförmiges und zur Mitte hin geneigtes Gitter (23) aufgesetzt ist, das mit seinem vom Prallsteg (22) abgekehrten Stirnende den Frischlufteinlaß (14) umgibt.

5. Vorrichtung nach einem der Ansprüche 1 - 4, dadurch gekennzeichnet, daß der Filterdeckel (16) in Anpassung an den Querschnitt von Frischlufteinlaß (14) und Öffnungsstutzen (24) des Luftverteilerkastens (12) etwa rechteckförmig ausgebildet ist und der Wasserablauf (19) durch eine sich längs der größten Abmessung des Filterdeckels (16) erstreckende mittige Rinne (20) gebildet ist, die von der einen Deckelseite zur anderen hin bei gleichzeitiger Verjüngung abfällt.

6. Vorrichtung nach Anspruch 5, dadurch gekennzeichnet, daß die Rinne (20) an ihrem verjüngten Ende in einen über den Deckelrand vorstehenden rohrförmigen Ablaufstutzen (21) mündet.

## Claims

1. Device for supplying fresh air to the passenger space of a vehicle having a body front end preceding the passenger space in the driving direction and surrounding an engine space coverable by an engine bonnet, with a fresh-air inlet arranged on the top side of the body front end and with an air distributor box which is located underneath it and which is covered with an air filter towards the fresh-air inlet and is equipped with a water run-off, characterized in that the fresh-air inlet (14) is arranged in the engine bonnet (10) and the water run-off (19) is arranged on the top side, facing the fresh-air inlet (14), of a hood-like filter cover (16) which covers the air filter (15) and which is fastened releaseably to the air distributor box (12) and carries air throughflow orifices (17) in its casing region.

2. Device according to Claim 1, characterized in that the air distributor box (12) has a collar-shaped orifice connection (24) which projects towards the freshair inlet (14) and surrounds an air inflow orifice (13) and in which the air filter (15) is located removably and on which the filter cover (16) can be attached releaseably.

3. Device according to Claim 1 or 2, characterized in that each air throughflow orifice (17) in the filter cover (16) is assigned a pivotable air flap (18) for its arbitrary closing or opening.

4. Device according to one of Claims 1 to 3, characterized in that the filter cover (16), on its top side facing the fresh-air inlet (14), carries a baffle web (22) which extends round in the manner of a collar and on which is attached an annular mesh (23) which serves as a coarse filter and is inclined towards the centre and which, with its end face facing away from the baffle web (22), surrounds the fresh-air inlet (14).

5. Device according to one of Claims 1 to 4, characterized in that the filter cover (16) is of approximately rectangular design to match the cross-section of freshair inlet (14) and orifice connection (24) of the air distributor box (12), and the water run-off (19) is formed by a central gutter (20) extending along the largest dimension of the filter cover (16) and descending, with a simultaneous narrowing, from one side of the cover to the other.

6. Device according to Claim 5, characterized in that the gutter (20) opens at its narrowed end into a tubular run-off connection (21) projecting beyond the cover edge.

**Revendications**

1. Dispositif pour l'admission d'air frais dans la cabine d'un véhicule, qui comporte un avant-corps de carrosserie, situé en avant de la cabine en considérant le sens de marche du véhicule et entourant un compartiment-moteur pouvant être recouvert par un capot, le dispositif comportant une entrée d'air frais située sur le côté supérieur de l'avant-corps de carrosserie ainsi qu'un boîtier de répartition d'air situé en dessous et qui est recouvert, en direction de l'entrée d'air frais, par un filtre à air et est pourvu d'une sortie d'eau, caractérisé en ce que l'entrée d'air frais (14) est disposée dans le capot de moteur (10) et la sortie d'eau (19) est disposée sur le côté supérieur, dirigé vers l'entrée d'air frais (14), d'un couvercle de filtre (16) en forme de hotte, qui recouvre le filtre à air (15) et qui est fixé de façon séparable sur le boîtier de répartition d'air (12) et comporte des ouvertures de passage d'air (17) dans sa zone périphérique.

2. Dispositif selon la revendication 1, caractérisé en ce que le boîtier de répartition d'air (12) comporte une tubulure (24) en forme de collet, faisant saillie en direction de l'entrée d'air frais (14) et, entourant une ouverture d'admission d'air (13), tubulure dans laquelle le filtre à air (15) est logé de façon amovible et sur laquelle le couvercle de filtre (16) peut être fixé de façon démontable.

3. Dispositif selon la revendication 1 ou 2, caractérisé en ce que, à chaque ouverture de passage d'air (17) est associé, dans le couvercle de filtre (16), un clapet d'air (18) pivotant pour produire à volonté sa fermeture ou son ouverture.

4. Dispositif selon une des revendications 1 à 3, caractérisé en ce que le couvercle de filtre (16) porte, sur son côté supérieur dirigé vers l'entrée d'air frais (14), un rebord (22) en forme de collet sur lequel est installée une grille (23) de forme annulaire, inclinée vers le centre, servant de filtre grossier et qui entoure l'entrée d'air frais (14) par son extrémité frontale opposée au rebord (22).

5. Dispositif selon une des revendications 1 à 4, caractérisé en ce que le couvercle de filtre (16) est pourvu d'une forme à peu près rectangulaire en adaptation à la section de l'entrée d'air frais (14) et de la tubulure (24) du boîtier de répartition d'air (12) et la sortie d'eau (19) est constituée par une goulotte centrale (20), s'étendant suivant la plus grande dimension du couvercle de filtre (16) et qui descend d'un côté du couvercle à l'autre en réduisant simultanément de section.

6. Dispositif selon la revendication 5, caractérisé en ce que la goulotte (20) débouche par son extrémité réduite dans une tubulure de décharge (21), de forme tubulaire, faisant saillie du bord de couvercle.

## Fig. 1

## Fig. 2